# EUROPÄISCHE PATENTSCHRIFT

(11) **EP 1 702 246 B1**
(45) Veröffentlichungstag und Bekanntmachung des Hinweises auf die Patenterteilung: **03.06.2015**
(21) Anmeldenummer: 04805040.5
(22) Anmeldetag: 28.12.2004
(51) Int. Cl.: G05B 19/418

(54) **PROZESSANLAGE MIT MEHREREN FELDGER TEN**
PROCESS INSTALLATION COMPRISING A PLURALITY OF FIELD APPLIANCES
INSTALLATION DE TRAITEMENT COMPORTANT PLUSIEURS DISPOSITIFS DE TERRAIN

(30) Priorität: 08.01.2004 DE 102004001474
(43) Veröffentlichungstag der Anmeldung: 20.09.2006
(73) Patentinhaber: Endress + Hauser GmbH + Co. KG, 79689 Maulburg (DE)
(72) Erfinder: ABBOT, Chris, 79664 Wehr (DE)
(74) Vertreter: Andres, Angelika Maria
(86) Internationale Anmeldenummer: PCT/EP2004/053714
(87) Internationale Veröffentlichungsnummer: WO 2005/066730

(56) Entgegenhaltungen:
- WO-A-00/77592
- WO-A-03/013104
- US-A- 6 065 060
- US-A1- 2002 103 946
- US-A1- 2002 183 863
- US-B1- 6 532 280
- US-B1- 6 618 630

## Beschreibung

Die Erfindung betrifft eine Prozessanlage mit mehreren Feldgeräten, ein Verfahren zur Datenübertragung in einer Prozessanlage mit mehreren Feldgeräten sowie ein Verfahren zur Modernisierung einer Prozessanlage mit mehreren Feldgeräten gemäß den Oberbegriffen des Anspruchs 1.

Moderne Prozessanlagen werden heutzutage normalerweise von einer zentralen Warte aus überwacht und gesteuert.

Die für diese Aufgaben, Überwachung bzw. Steuerung, notwendigen Informationen werden zwischen den einzelnen Prozesskomponenten und der Warte in digitaler Form über eine entsprechende Signalleitung übertragen.

Insbesondere bei Tankfarmen, Raffinerien, Pipelines, etc. sind lange Signalleitungen von mehreren Kilometern notwendig, um die einzelnen Prozesskomponenten mit der Warte zu verbinden.

Die in der Prozessautomatisierungstechnik bekannten Übertragungsstandards (HART, Profibus, Foundation Fieldbus) sind für derartige langen Signalwege nicht geeignet bzw. nur bedingt geeignet.

Deshalb werden vielfach bei bestehenden Tankfarmen vielfach proprietäre Kommunikationssysteme (Kommunikationsprotokolle bzw. Kommunikationstechniken) wie z. B. Wessoematic WM550, Varec Mark/Space, Sakura V1, Tiway etc., die speziell für die Datenübertragung auf relativ langen Signalleitungen angepasst sind, eingesetzt.

Ein weiterer Grund für die Verwendung dieser proprietären Kommunikationssysteme liegt auch darin, dass zum Zeitpunkt als die digitale Kommunikation Einzug im Bereich Tankfarmen gehalten hat, die heute gängigen Feldbussysteme noch gar nicht entwickelt waren.

Ein Nachteil dieser im Einsatz befindlichen Kommunikationssysteme liegt in der geringen Datenübertragungsrate, die u. a. auch durch die eingesetzten Signalleitungen bedingt ist. Als Signalleitungen werden meist nicht abgeschirmte und nicht verdrillte Kupferdrahtleitungen verwendet.

Für höhere Datenübertragungsraten werden in der Feldbustechnik jedoch meist verdrillte und gegebenenfalls auch abgeschirmte Signalleitungen benötigt.

Bei einem Wechsel von den herkömmlichen Datenübertragungsraten auf höhere Datenübertragungsraten wäre zumindest ein kostspieliger Austausch der Signalleitungen notwendig.

Vielfach werden bei bestehenden Tankfarmen auch ältere Feldgeräte eingesetzt, die nicht mehr dem absolut neuesten Stand der Technik entsprechen.

Neuere Feldgeräte besitzen weitaus verbesserte Funktionalitäten und setzten deshalb auch auf höhere Datenübertragungsraten.

Bei der Modernisierung einer bestehenden Tankfarm ergibt sich daraus folgende Problematik.

Eine Modernisierung ist nur dann möglich, wenn alle Feldgeräte, die entsprechend den bisher eingesetzten proprietären Kommunikationssystemen arbeiten durch neue moderne Geräte ausgetauscht werden (wie in WO03/013104 A) und / oder die Signalleitungen entsprechend angepasst, d. h. vollständig ersetzt werden. Diese Maßnahmen wären mit erheblichen Kosten verbunden und gleichzeitig würde sie einen längeren Ausfall der gesamten Prozessanlage bedeuten.

In der Regel werden innerhalb einer Kommunikationsschleife (communication loop) immer nur einzelne Geräte oder Gerätegruppen ausgetauscht. Das erfordert eine Kompatibilität bezüglich des benutzten Übertragungsweges der neuen Geräte und Protokolle mit den alten Geräten und Protokollen

Aufgabe der vorliegenden Erfindung ist es deshalb eine Prozessanlage mit mehreren Feldgeräten anzugeben, die eine verbesserte Kommunikation mit z. B. höheren Datenübertragungsraten, erweiterten Funktionalitäten oder aktuelleren Protokollen (z.B. TCP / IP) ohne großen Kostenaufwand ermöglicht.

Gelöst wird diese Aufgabe durch die in Anspruch 1 angegebenen Merkmale.

Die wesentliche Idee der Erfindung besteht darin, die bestehenden Signalleitungen nicht auszutauschen, sondern auch für die schnellere Datenübertragung zwischen den Feldgeräten und der Warte gemäß einer neuen Datenübertragungstechnik zu nutzen.

In vorteilhafter Weise entspricht die neue Übertragungstechnik der im Telekommunikationsbereich bereits verwendeten DSL-Technik (digital subscriber line).

Nachfolgend ist die Erfindung anhand eines in der Zeichnung dargestellten Ausführungsbeispiels näher erläutert.

Es zeigen:
Fig. 1 Tankfarm mit mehreren Flüssigkeitsbehältern;
Fig. 2 erfindungsgemäße Tankfarm.

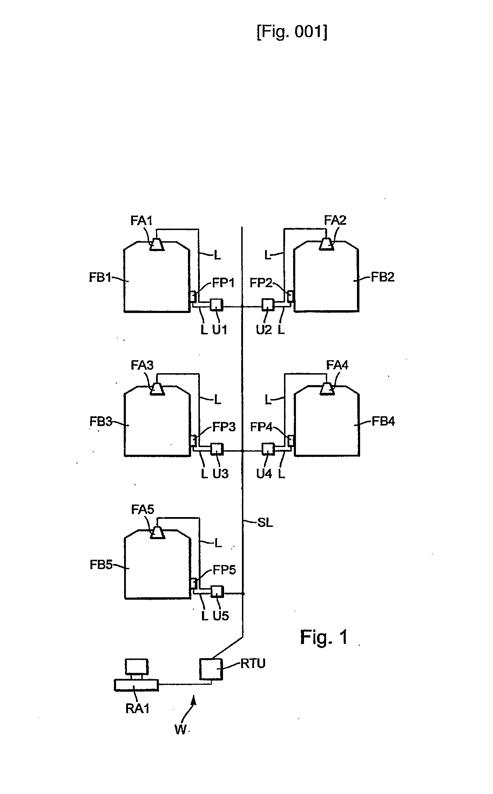

In Fig. 1 ist als Beispiel für eine Prozessanlage eine typische Tankfarm mit mehreren Flüssigkeitsbehältern FB1, FB2, FB3, FB4, FB5 schematisch dargestellt. Bei den Flüssigkeitsbehältern FB handelt es sich um Lagerbehälter für Rohöl. Eine Tankfarm kann sich über ein Gebiet von mehreren Kilometern erstrecken.

Um den Füllstand in den Lagerbehältern zu erfassen weist jeder der Flüssigkeitsbehälter FTB1- FTB5 je einen Füllstandssensors FA1-FA5 und je einen Drucksensor FP1-FP5 auf. Meist wird in diesem Anwendungsbereich die Radar-Technik zur Füllstandsmessung eingesetzt.

Die Sensoren sind über 2 Draht-Leitungen L z.B. gemäß dem HART-Standard mit einer Umsetzereinheit U verbunden, von wo eine Signalleitung SL zur Warte W führt.

Es sind auch Anwendungen bekannt, wo Sensoren direkt mit der zur Warte führenden Signalleitung verbunden sind.

In der Warte W ist eine Rechnereinheit RA1 vorgesehen, die als Leitsystem (Host-Rechner) dient und die u. a. zur Visualisierung der aktuellen Füllstände in den Lagerbehältern FB1-FB5 z. B. mit Hilfe der Software FuelsManager der Fa. Endress+Hauser dient. Der Rechnereinheit RA1 ist eine Fernwirkeinheit RTU1 vorgeschaltet, in der die von den Sensoren kommenden Daten gespeichert und für den Abruf durch die Rechnereinheit RA1 über eine RS232/RS485-Schnittstelle bzw. Netzwerkschnittstelle bereitgestellt werden.

Für den Datenaustausch zwischen den Sensoren und der Warte W wird im Nahbereich der Flüssigkeitsbehälter die HART-Technik und für die "Fernübertragung" bis zur Warte eine proprietäre Datenübertragungstechnik nach einem entsprechenden Industriestandard wie z. B. Whessoematic WM550, Varec Mark/Space, Sakura V1, Tiway eingesetzt.

Bei der Umsetzeinheiten U kann es sich z.B. um Tank Side Monitore der Fa. Endress+Hauser handeln.

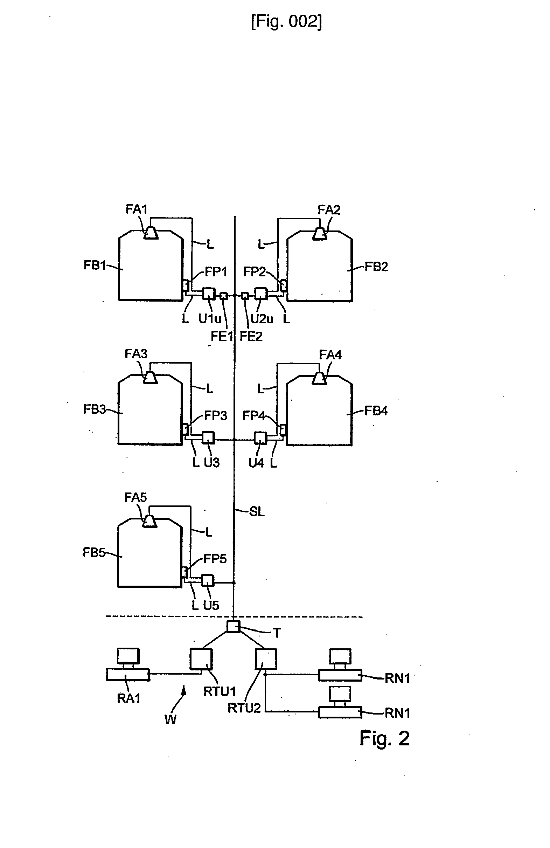

In Fig. 2 ist eine erfindungsgemäße Tankfarm dargestellt. Im Unterschied zu Fig. 1 sind die alten Umsetzeinheiten U1 und U2 durch neue Umsetzeinheiten U1n und U2n ersetzt worden. Diese neuen Umsetzeinheiten U1n, U2n kommunizieren nicht mehr gemäß der relativ langsamen bisher verwendeten Übertragungstechnik sondern gemäß einer neuen Datenübertragungstechnik mit der Warte W. Der Datenaustausch erfolgt über die vorhandene Signalleitung SL. Im Unterschied zu Fig. 1 sind bei jeder neuen Umsetzereinheit U1n, U2n jeweils eine Filtereinheit FE1, (die Filtereinheiten sind Sinnvollerweise gleich in den neuen Umsetzereinheiten U1n mit eingebaut., d.h. sind optional) FE2 und in der Warte W eine Trenneinheit T in der Signalleitung SL vorgesehen.

Die alten Umsetzereinheiten müssen ebenfalls mit einer Filtereinheit ausgestattet werden, falls die Eingangsschaltung der alten Einheiten empfindlich auf das Frequenzband der neuen Übertragungstechnik reagieren.

Zusätzlich sind in der Warte W weitere Rechnereinheiten RN1, RN2 als Leitsysteme vorgesehen. Die getrennten Rechnereinheiten RA1, RN1 und RN2 können auch durch ein einziges Prozessleitsystem ersetzt werden; die Rechnereinheiten RN1 und RN2 sind also optional.

Nachfolgend ist die Funktionsweise der Erfindung näher erläutert.

Die Feldgeräte U3, U4, U5 an den Tankbehältern FB3-FB5 kommunizieren in herkömmlicher Weise gemäß einer ersten Datenübertragungstechnik mit einer relativ geringen Datenübertragungsrate (kleiner 10000 Baud) mit der Warte W.

Die neuen Feldgeräte U1n und U2n kommunizieren gemäß einer zweiten Datenübertragungstechnik (zum Beispiel DSL-Technik) mit der Warte W. Als Kommunikationsmedium wird die vorhandene Signalleitung SL verwendet. Die zweite Datenübertragungstechnik erlaubt im Vergleich zur ersten Technik erweiterte Möglichkeiten, z.B. mehr Befehle, Diagnose und / oder eine erheblich höhere Datenübertragungsrate als die bisher eingesetzte Technik. Somit können Daten von den Sensoren FA1, FP1 bzw. FA2, FP2 erheblich schneller und / oder mit erweiterter Funktionalität zur Warte W übertragen werden.

Die beiden Übertragungstechniken beeinflussen sich gegenseitig nicht, da getrennte Datenübertragungskanäle mit unterschiedlichen Frequenzbändern benutzt werden.

Die herkömmlichen Kommunikationstechniken verwenden das Frequenzband bis 4 kHz. Die DSL Technik verwendet das Frequenzband größer 30 KHZ (ADSL) bzw. 138 kHz (T-DSL).

Für die DSL-Technik genügt zur Signalübertragung ein einfaches zweiadriges Kupferkabel, so dass die vorhandene Signalleitung SL weiterhin genutzt werden kann. Die optionalen Filtereinheiten FE1 und FE2 filtern die entsprechenden Signale aus und leiten sie an die Feldgeräte U1n bzw. U2n weiter.

Die Trenneinheit T trennt die Signale entsprechend den Datenkanälen und leitet sie an die Fernwirkeinheiten RTU1 bzw. RTU2 weiter. Die Fernwirkeinheit RTU2 arbeitet nach der zweiten Datenübertragungstechnik und stellt die Daten für die Rechnereinheiten RN1 und RN2 über entsprechende Schnittstellen (z. B. Ethernet) zur Verfügung.

Alternativ können die Fernwirkeinheiten RTU1 und RTU2 auch mit einem gemeinsamen Kommunikationsnetzwerk für alle Rechnereinheiten RA1 und RN1, RN2 verbunden sein.

Denkbar ist auch, neue Feldgeräte, die für die zweite Datenübertragungstechnik ausgelegt sind, direkt mit der Signalleitung SL zu verbinden.

Ein wesentlicher Vorteil der DSL-Technik ist die erheblich höhere Datenübertragungsrate und die im Vergleich zu den alten Protokollen erweiterte Funktionalitäten.

Aufgrund der höheren Datenübertragungsrate ist es nun möglich ganze Programme, sogenannnte Software-Updates, von der Warte zu den einzelnen Feldgeräten schnell, einfach und sicher zu übertragen. Das Programm, das auch mehrere MB groß sein kann, wird dann im Feldgerät in einem entsprechenden Speicher (z. B. Flash-EEPROM) abgespeichert.

Bisher war es nur möglich Programme direkt am Feldgerät über eine am Feldgerät vorgesehene Service-Schnittstelle zu übertragen. Hierfür musste das betreffende Feldgerät von einem Service-Techniker aufgesucht und mit einer tragbaren Rechnereinheit (z. B. Laptop) verbunden werden, bevor das Programm übertragen werden konnte.

Nachteil der bisherigen Vorgehensweise ist der Aufwand für ein Software-Update verbunden ist. Die Feldgeräte sind teilweise weit entfernt von der Warte installiert. Zum Teil sind die Geräte auch schwer zugänglich und rauhe klimatische Umgebungsbedingungen (Wind, Eis, Regen, Schnee, etc.) erschweren das Arbeiten. Nicht immer sind die Rechnereinheiten für diese rauen Ungebungsbedingungen ausgelegt. Bei einem Feldgerät wie dem Prosonic S der Fa. Endress+ Hauser kann ein Software-Update über die Serviceschnittstelle bis zu einer Stunde daueren, weil auch die Datenübertragungsgeschwindigkeit der Serviceschnittstelle sehr begrenzt ist.

Ein weiterer Vorteil den der Einsatz der DSL-Technik bietet ist darin zu sehen, dass die Elektronik-Komponenten, die für die neuen Feldgeräte bzw. die neuen Fernwirkeinheiten benötigt werden, bereits entwickelt und auch käuflich erwerbbar sind.

Da diese Komponenten für den Internetzugang sowohl im priv. wie auch im geschäftlichen Bereich vielfach eingesetzt werden, sind sie aufgrund der hohen Stückzahlen besonders kostengünstig. Aufwendige Neuentwicklungen entfallen deshalb.

## Patentansprüche

1. Prozessanlage mit mehreren Feldgeräten, die über eine Signalleitung (SL) mit einer Warte (W) Daten austauschen, wobei die Signalleitung (SL) für eine herkömmliche erste Datenübertragungstechnik mit einer kleineren Datenübertragungsrate als 10000 Baud ausgelegt ist, **dadurch gekennzeichnet, dass** mindestes ein Feldgerät zum Datenaustausch nicht die erstegaber eine zweite Datenübertragungstechnik einsetzt, die eine größere Datenübertragungsrate und/oder eine erweiterte Funktionalität als die erste Übertragungstechnik erlaubt, und die als Kommunikationsmedium die vorhandene Signalleitung (SL) verwendet,
dass die erste und die zweite Datenübertragungstechnik getrennte Datenübertragungskanäle die unterschiedliche Frequenzbänder belegen benutzen,
dass der erste Datenübertragungskanal das Frequenzband bis 4 kHz und der zweite Datenübertragungskanal den Frequenzbereich größer 4 kHz belegt, und
dass die zweite Datenübertragungstechnik der DSL-Technik, d.h. digital subscriber line, entspricht und das Frequenzband größer 30 kHz bei ADSL bzw. 138 kHZ bei T-DSL verwendet.

2. Prozessanlage nach einem der vorhergehenden Ansprüche, **dadurch gekennzeichnet, dass** die Signalleitung (SL) eine 2-Draht-Leitung ist.

3. Prozessanlage nach einem der vorhergehenden Ansprüche, **dadurch gekennzeichnet, dass** die Signalleitung (SL) eine Kupfer 2-Draht-Leitung mit einer Bandbreite von ca. 1 MHz ist.

4. Prozessanlage nach einem der vorhergehenden Ansprüche, **dadurch gekennzeichnet, dass** das die erste Datenübertragungstechnik nach einem Industriestandard z. B. Whessoematic WM550, Varec Mark/Space, Sakura V1, Tiway Profibus, HART, FF erfolgt.

5. Prozessanlage nach einem der vorhergehenden Ansprüche, **dadurch gekennzeichnet, dass** die Prozessanlage eine Tankfarm mit mehreren Flüssigkeitstankbehältern (FB1, FB2, FB3, FB4, FB5) ist.

6. Verfahren zur Modernisierung einer Prozessanlage mit mehreren Feldgeräten, die über eine Signalleitung (SL) Daten mit einer Warte (W) austauschen,
**dadurch gekennzeichnet,**
**dass** ältere Feldgeräte, die nach einer ersten Übertragungstechnik mit einer relativ geringen Datenübertragungsrate insbesondere kleiner 10000 Baud, Daten an die Warte (W) übertragen durch neue Feldgeräte, die nicht nach der ersten, aber nach einer zweite Übertragungstechnik im Vergleich zur ersten Übertragungstechnik mit einer erweiterten Funktionalität, z.B. mehr Befehle, Diagnose und / oder mit einer höhere Datenübertragungsrate die Daten erheblich schneller zur Warte (W) überträgt, ersetzt werden, wobei die Datenübertragung gemäß der zweiten Übertragungstechnik in einem von der ersten Übertragungstechnik separaten Übertragungskanal mit einem unterschiedlichen Frequenzband auf der vorhandenen Signalleitung (SL) erfolgt, so dass sich die Datenübertragungssignale der verschiedenen Übertragungstechniken nicht beeinflussen, wobei die zweite Datenübertragungstechnik der DSL-Technik, d.h. digital subscriber line, entspricht.

## Claims

1. Process plant with several field devices, which exchange data with a control room (W) via a signal line (SL), wherein the signal line (SL) is designed for a conventional initial data transmission technology with a data transmission rate of less than 10000 baud, **characterized in that** at least one field device uses not the first but a second data transmission technology which permits a higher data transmission rate and/or a greater functionality than the first data transmission technology and which uses the existing signal line (SL) as the communication medium,
**in that** the first and second data transmission technology use separate data transmission channels that occupy different frequency bands,
**in that** the first data transmission channel occupies the frequency band up to 4 kHz and the second data transmission channel occupies the frequency range greater than 4 kHz, and
**in that** the second data transmission technology corresponds to DSL technology (i.e. digital subscriber line) and uses the frequency band above 30 kHz in the case of ADSL or 138 kHz in the case of T-DSL.

2. Process plant as claimed in one of the previous claims, **characterized in that** the signal line (SL) is a 2-wire line.

3. Process plant as claimed in one of the previous claims, **characterized in that** the signal line (SL) is a copper 2-wire line with a bandwidth of approx. 1 MHz.

4. Process plant as claimed in one of the previous claims, **characterized in that** the first data transmission technology is implemented in accordance with an industry standard, e.g. Whessoematic WM550, Varec Mark/Space, Sakura V1, Tiway Profibus, HART, FF.

5. Process plant as claimed in one of the previous claims, **characterized in that** the process plant is a tank farm with several liquid vessels (FB1, FB2, FB3, FB4, FB5).

6. Procedure to modernize a process plant with several field devices which exchange data with a control room (W) via a signal line (SL),
**characterized in that**
older field devices that transmit data to the control room (W) according to a first transmission technology with a relatively low data transmission rate, particularly less than 10000 baud, are replaced by new field devices which transmit the data to the control room (W) not according to the first data transmission technology but according to a second transmission technology in a manner which is considerably faster compared with the first transmission technology, with an extended functionality, e.g. more commands, diagnostics and/or a higher data transmission rate, wherein data transmission in accordance with the second transmission technology takes place in a transmission channel, which is separate from the first transmission technology, with a different frequency band on the existing signal line (SL) such that the data transmission signals of the different transmission technologies do not affect one another, wherein the second data transmission technology corresponds to DSL technology, i.e. digital subscriber line.

## Revendications

1. Installation de process dotée de plusieurs appareils de terrain, qui échangent des données avec un poste de commande (W) par l'intermédiaire d'un câble de signal (SL), le câble de signal (SL) étant conçu pour une première technique de transmission de données traditionnelle avec une vitesse de transmission de données inférieure à 10 000 bauds, **caractérisée**
**en ce qu'**au moins un appareil de terrain utilise non pas la première mais une deuxième technique de transmission de données, qui permet une vitesse de transmission de données et/ou une fonctionnalité supérieures à la première technique de transmission de données, et qui utilise comme moyen de communication le câble de signal (SL) existant,
**en ce que** la première et la deuxième technique de transmission de données utilisent des canaux de transmission de données séparés, qui occupent des bandes de fréquence différentes,
**en ce que** le premier canal de transmission de données occupe la bande de fréquence jusqu'à 4 MHz et le deuxième canal de transmission de données la plage de fréquence supérieure à 4 MHz, et
**en ce que** la deuxième technique de transmission de données correspond à la technique DSL, c'est-à-dire "Digital Subscriber Line" et utilise la bande de fréquence supérieure à 30 kHz pour l'ADSL, ou supérieure à 138 kHz pour le T-DSL.

2. Installation de process selon l'une des revendications précédentes, **caractérisée en ce que** le câble de signal (SL) est un câble bifilaire.

3. Installation de process selon l'une des revendications précédentes, **caractérisée en ce que** le câble de signal (SL) est un câble bifilaire en cuivre avec une bande passante d'env. 1 MHz.

4. Installation de process selon l'une des revendications précédentes, **caractérisée en ce que** la première technique de transmission de données s'effectue d'après une norme industrielle, par exemple Whessoematic WM550, Varec Mark/Space, Sakura V1, Tiway Profibus, HART, FF.

5. Installation de process selon l'une des revendications précédentes, **caractérisée en ce que** l'installation de process est un parc de citernes constitué de plusieurs réservoirs de liquide (FB1, FB2, FB3, FB4, FB5).

6. Procédé destiné à la modernisation d'une installation de process dotée de plusieurs appareils de terrain, qui échangent des données avec un poste de commande (W) par l'intermédiaire d'un câble de signal (SL),
**caractérisé**
**en ce que** les anciens appareils de terrain, qui transmettent des données au poste de commande (W) d'après une première technique de transmission à une vitesse de transmission de données relativement faible, notamment inférieure à 10 000 bauds, sont remplacés par de nouveaux appareils de terrain, qui transmettent les données nettement plus rapidement au poste de commande (W) non pas d'après la première, mais d'après une deuxième technique de transmission qui, comparée à la première technique de transmission, est dotée d'une fonctionnalité étendue, par exemple davantage de commandes, d'une fonction de diagnostic et/ou avec une vitesse de transmission de données supérieure, la transmission de données s'effectuant, conformément à la deuxième technique de transmission dans un canal de transmission séparé de la première technique de transmission, avec une bande de fréquence différente sur le câble de signal (SL) existant, de telle sorte à ne pas influencer les signaux de transmission de données des différentes techniques de transmission, la deuxième technique de transmission correspondant à la technique DSL, c'est-à-dire "Digital Subscriber Line".
